# EUROPÄISCHE PATENTSCHRIFT

(11) **EP 2 854 506 B1**
(45) Veröffentlichungstag und Bekanntmachung des Hinweises auf die Patenterteilung: **20.07.2016**
(21) Anmeldenummer: 13732811.8
(22) Anmeldetag: 21.05.2013
(51) Int. Cl.: A01G 7/00, A01M 7/00, G01N 21/27

(54) **VERFAHREN ZUM BERÜHRUNGSLOSEN BESTIMMEN DES AKTUELLEN ERNÄHRUNGSZUSTANDES EINES PFLANZENBESTANDES UND ZUM VERARBEITEN DIESER INFORMATION**
METHOD OF DIAGNOSING THE NUTRITIOUS CONDITION OF PLANTS IN A FIELD AND DETERMINING A TREATMENT PLAN
PROCÉDÉ DE DÉTERMINATION SANS CONTACT DE L'ÉTAT NUTRITIONNEL D'UN PEUPLEMENT VÉGÉTAL ET DE TRAITEMENT DE CETTE INFORMATION

(30) Priorität: 04.06.2012 DE 102012010912
(43) Veröffentlichungstag der Anmeldung: 08.04.2015
(73) Patentinhaber: YARA International ASA, 0240 Oslo (NO)
(72) Erfinder: REUSCH, Stefan, 48249 Dülmen (DE)
(74) Vertreter: Hannig, Wolf-Dieter
(86) Internationale Anmeldenummer: PCT/DE2013/000274
(87) Internationale Veröffentlichungsnummer: WO 2013/182179

(56) Entgegenhaltungen:
- DE-A1-102005 050 302
- JP-A- 2008 175 537
- US-B1- 6 683 970
- US-B1- 6 734 973

## Beschreibung

Die Erfindung betrifft ein Verfahren zum berührungslosen Bestimmen des aktuellen Ernährungszustandes eines Pflanzenbestandes gemäß dem Oberbegriff des Anspruchs 1.

### Stand der Technik

Aus der DE 10 2005 0503 02 A1 ist ein Verfahren zum berührungslosen Ermitteln des aktuellen Ernährungszustandes eines Pflanzenbestandes und zum Verarbeiten dieser Information unter Berücksichtigung weiterer Parameter wie Fruchtart und/oder Sorte und/oder Entwicklungsstadium und/oder Ertragsziel in eine Düngeempfehlung bekannt, bei dem von einem Teil des Pflanzenbestandes mindestens ein digitales Bild mittels eines Bildaufnahmesystems in mindestens zweispektralen Kanälen aufgenommen, aus dem Bild der aktuelle Ernährungszustand durch eine Bildanalyse ermittelt und aus letzterer die Düngeempfehlung abgeleitet wird.

Dieser bekannte Stand der Technik hat den Nachteil, dass am Bildaufnahmesystem eine Referenzfläche erforderlich ist, mit deren Hilfe die Reflexionsgrade der im RGB (Rot-Grün-Blau)-Bild radiometrisch kalibriert werden müssen.

Die Befestigung der Referenzfläche an den Bildaufnahmesystemen ist kompliziert und führt im rauen Betrieb in der Landwirtschaft oftmals zu Störungen, so dass fehlerhafte Ergebnisse oder zumindest nicht repräsentative Messungen nicht ausgeschlossen werden können. Außerdem verursacht die Notwendigkeit, eine spezielle Referenzfläche am Bildaufnahmesystem zu montieren, zusätzliche Kosten und zusätzlichen Aufwand, so dass der Nutzerkreis eingeschränkt ist.

Aus der US 6 68370 B1, WO 9014635 A1 und US 5 841 883 A ist bekannt, digitale Bilder von Pflanzen unter Heranziehung der Farbwerte einzelner Pixel zu analysieren.

### Aufgabenstellung

Bei diesem Stand der Technik liegt der Erfindung die Aufgabe zugrunde, das Verfahren zum berührungslosen Bestimmen des Ernährungszustandes eines Pflanzenbestandes und zum Verarbeiten dieser Informationen derart zu verbessern, dass bei mindestens gleichbleibender Messgenauigkeit für die Pflanzenparameter die Kosten reduziert, eine deutlich vereinfachte Handhabung für den Landwirt erreicht und der Kreis der potenziellen Nutzer erheblich vergrößert wird.

Diese Aufgabe wird durch ein Verfahren der eingangs genannten Gattung mit den Merkmalen des Anspruches 1 gelöst.

Vorteilhafte Ausgestaltungen des Verfahrens sind den Unteransprüchen entnehmbar.

Die erfindungsgemäße Lösung geht von der Erkenntnis aus, dass das digitale Bild in sich durch das Ermitteln der relativen Farbwerte für die einzelnen Bildpixel nach der Bildaufnahme in der Bildanalyse auf unterschiedliche Lichtbedingungen, Bildeinstellungen und Bildaufnahmesysteme kalibriert wird, wobei der nicht mit Pflanzen bedeckte Boden- bzw. Hintergrundanteil an der Gesamtfläche des digitalen Bildes mindestens 10 bis 20% beträgt.

Dies wird durch folgende Schritte erreicht:
a) Ermitteln eines Farbwertes für jedes Pixel des digitalen Bildes, vorzugsweise durch Zuordnen eines Farbtones aus dem HSB (Hue-Saturation-Brightness)-Farbraum, einer G-R (Grün-minus-Rot)-Differenz oder eines Grauwertes;
b) Bestimmen eines Histogramms für alle Farbwerte des Bildes;
c) automatisches Bestimmen eines Schwellwertes mittels statistischer Hilfsmittel aus der Streuung der Farbwerte zum Separieren des Histogramms in die dem Boden bzw. Hintergrund und den Blättern des Bestandes zugehörigen Pixel;
d) Binarisieren des Bestandes mit dem im Schritt c) bestimmten Schwellwert;
e) Ermitteln des Anteils der zu den Blättern gehörenden Pixel an der zum Bild gehörenden Gesamtzahl und Feststellen des aktuellen Ernährungszustandes aus diesem Anteil;
f) Ableiten der Dünge- und/oder Pflanzenschutzempfehlung aus dem im Schritt e) bestimmten Ernährungszustand.

Für die Bearbeitung des Binärbildes hat es sich als zweckmäßig erwiesen, die Kanten im Binärbild durch Erosion bzw. Dilatation zu glätten, einzelne verrauschte Pixel zu entfernen und überbelichtete Pixel unabhängig vom ermittelten Farbwert als zu den Blättern gehörende Pixel zu klassifizieren.

Das erfindungsgemäße Verfahren zeichnet sich dadurch aus, dass als Bildaufnahmesysteme handelsübliche Smartphone bzw. Digitalkameras ohne spezielle zusätzliche Einrichtungen wie Halter und Referenzflächen und als Bildauswertesysteme handelsübliche Rechner zum Einsatz kommen können und die Fehlerquellen bei der Kalibrierung der Hardware auf unterschiedliche Lichtbedingungen, Bildeinstellungen und Bildaufnahmesysteme ausgeschlossen werden und die Anwendung durch den Landwirt vereinfacht wird.

In weiterer Ausgestaltung des erfindungsgemäßen Verfahrens wird das Bildaufnahmesystem vom Nutzer zur Aufnahme des mindestens einen Bildes senkrecht über den Pflanzenbestand oder zum Hintergrund gehalten, dieses gespeichert und sofort am Ort der Aufnahme durch ein im Smartphone implementierten Bildkalibrierung- und -auswertealgorithmus unter Abfrage von entsprechenden Parametern wie Fruchtart und/oder Sorte und/oder Entwicklungsstadium und/oder Ertragsziel analysiert und daraus eine aktuelle Dünge-und/oder Pflanzenschutzempfehlung abgeleitet und angezeigt. Von besonderem Vorteil ist, dass ein im Smartphone angeordneter Lagesensor sicherstellt, dass die Bildaufnahme nur dann ausgelöst wird, wenn die Kamera des Smartphone eine senkrechte Lage einnimmt, wodurch die Aufnahme von Bildern aus schrägem Winkel vermieden und damit zusätzliche Fehlerquellen ausgeschlossen werden.

Alternativ besitzt das Smartphone eine Client-Software, die die eingebaute Kamera ansteuert und die Nutzereingaben wie Fruchtart und/oder Entwicklungsstadium und/oder Ertragserwartung abfragt. Die Bilder werden im Smartphone zwischengespeichert und schließlich zusammen mit den abgefragten Nutzereingaben über eine Internetverbindung zu einem zentralen Server gesandt, auf dem der Bildkalibrierung- und -auswertealgorithmus installiert ist. Die digitalen Bilder werden mittels des Bildkalibrierung- und -auswertealgorithmus im zentralen Server verarbeitet und ausgewertet, die Dünge-und/oder Pflanzenschutzempfehlung ermittelt und diese über die Internetverbindung an das Smartphone zurückgesandt. Das Ergebnis wird anschließend durch die Client-Software auf dem Display des Smartphones angezeigt. Der Landwirt ist damit in der Lage mit einfachen Mitteln aktuelle Messergebnisse über den Zustand des Pflanzenbestandes zu gewinnen und entsprechende Maßnahmen zur Düngung und/oder zum Ausbringen von Pflanzenschutzmitteln einzuleiten.

In weiterer Ausgestaltung des erfindungsgemäßen Verfahrens ist der Bildkalibrierung- und -auswertealgorithmus auf einem zentralen Server installiert, der über einen auf dem gleichen oder anderen Server implementierten Web-Service die Nutzereingaben wie Fruchtart und/oder Sorte und/oder Entwicklungsstadium und/oder Ertragsziel abfragt, und dem Nutzer die Möglichkeit gibt, zuvor mit einer Digitalkamera aufgenommene RGB-Bilder auf den Server hochzuladen. Diese Bilder werden zusammen mit den Nutzereingaben mittels des Bildkalibrierungs- und -auswertealgorithmus auf dem Server verarbeitet und die daraus resultierende Dünge- und/oder Pflanzenschutzempfehlung auf dem Web-Browser des Anwenders angezeigt.

Besonders vorteilhaft ist, dass es mit dem im Smartphone eingebauten GPS-Empfänger oder über das Mobilfunknetz möglich wird, die mit der Digitalkamera aufgenommenen Bilder mit den Positionsdaten zu verknüpfen und diese an den zentralen Server zu übertragen, wodurch für den Landwirt ortsabhängige Dünge- und/oder Pflanzenschutzempfehlungen generiert werden können.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an zwei Ausführungsbeispielen näher erläutert werden.

Es zeigen
Fig. 1a ein Beispiel einer schematischen Darstellung des Bildaufnahme- und -auswertesystems mit in ein internetfähiges Smartphone integrierte Digitalkamera, die bei der Bildaufnahme waagerecht über dem Pflanzenbestand zur Aufnahme eines RGB-Bildes gehalten wird,
Fig. 1b ein typisches Bildaufnahme- und -auswertesystem mit einem Smartphone und lokalem/zentralem Server,
Fig. 2 eine schematische Darstellung des Ablaufs des erfindungsgemäßen Verfahrens,
Fig. 3 ein Beispiel eines RGB-Bildes für einen mit Winterraps bebauten Schlag,
Fig. 4 ein Beispiel eines nach der Grün-minus-Rot-Differenz (G-R)-Methode ermittelten Farbwert-Bildes,
Fig. 5 ein Beispiel eines Histogramms der Farbwerte mit nach der Isodata-Methode bestimmtem Schwellwert,
Fig. 6 ein Beispiel eines aus dem Farbwert-Bild durch Anwendung des Schwellwerts gewonnenen Binärbildes,
Fig. 7 ein Beispiel eines geglätteten Binärbildes,
Fig. 8 ein Beispiel für die Ermittlung der Stickstoffaufnahme aus dem Anteil der als Blatt klassifizierten Pixel,
Fig. 9 ein Beispiel für eine nach dem erfindungsgemäßen Verfahren ermittelte StickstoffDüngeempfehlung und
Fig. 10 eine weitere Variante des Bildaufnahme- und -auswertesystems mit einer in ein internetfähiges Smartphone integrierten Digitalkamera, die bei der Bildaufnahme senkrecht nach oben in das Blätterdach eines Baumbestandes gehalten wird.

### Beispiel 1

Das erfindungsgemäße Verfahren zum berührungslosen Bestimmen des aktuellen Ernährungszustandes eines Pflanzenbestandes 1 und zum Verarbeiten dieser Informationen in eine Empfehlung für das Düngen und/oder den Pflanzenschutz des Bestandes soll auf einem mit Winterraps bebauten Schlag zur Anwendung kommen.

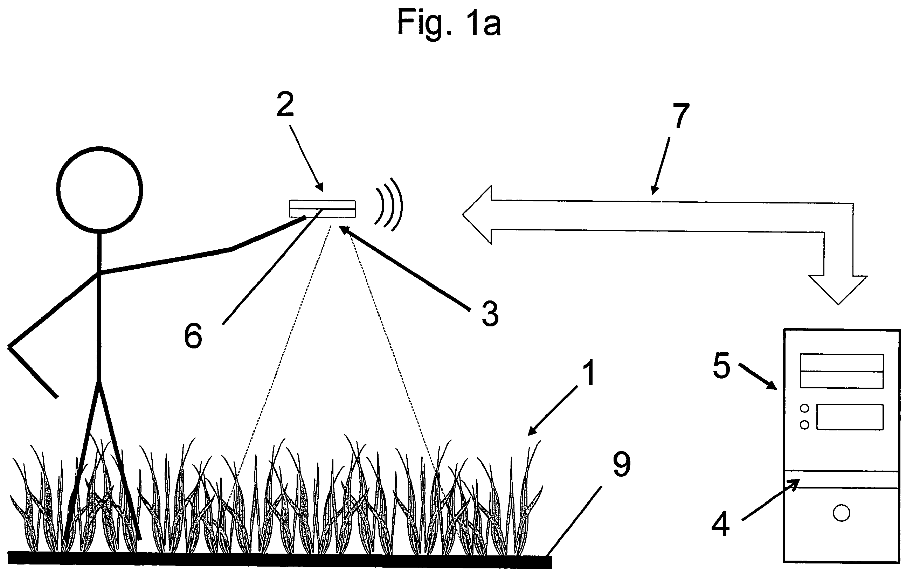

Der Landwirt setzt -wie Fig. 1a zeigt- für das manuell auszuführende erfindungsgemäße Verfahren als Bildaufnahmesystem ein internetfähiges Smartphone 2, in das eine Digitalkamera 3 intergiert ist, und als Bildkalibrierungs- und -auswertesystem ein im Speicher 4 eines zentralen Servers 5 implementierten Bildkalibrierungs- und -auswertealgorithmus zur Durchführung einer Kalibrierung eines bereits aufgenommenen Bildes und zugleich einer Bildanalyse ein. Durch optische Begutachtung des Pflanzenbestandes 1 stellt der Landwirt fest, ob der Pflanzenbestand eine ausreichende Bodensicht aufweist, d.h. durch Pflanzen nicht vollständig geschlossen ist. Die Bedingung ist, dass mindestens 10 bis 20% des Bodens sichtbar sein muss, um repräsentative Ergebnisse zu liefern.

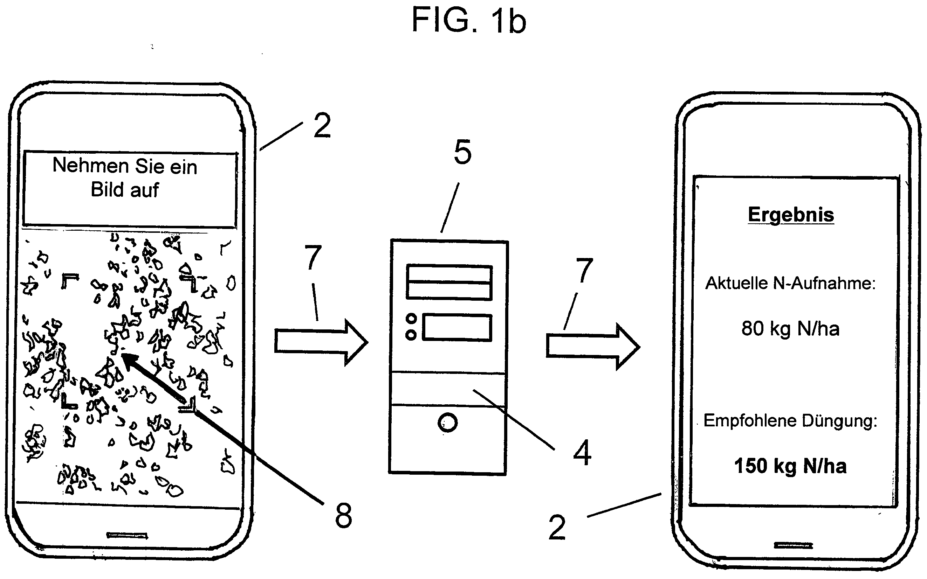

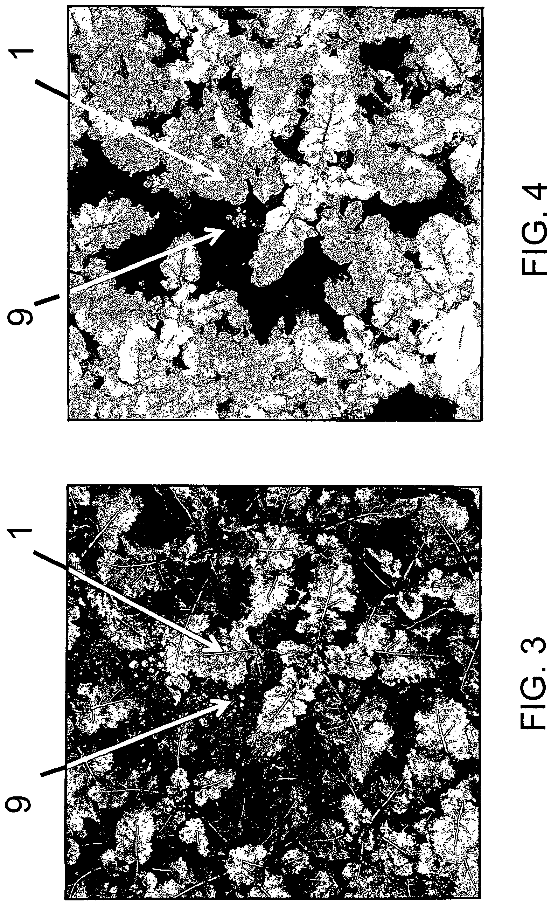

Nach der Abfrage von bestandsspezifischen Daten zum Pflanzenbestand 1 wie Fruchtart und/oder Sorte und/oder Entwicklungsstadium und/oder Ertragsziel durch eine im Smartphone 2 abgelegte Client-Software werden die von der Digitalkamera 3 aufgenommenen und in ihrem Zwischenspeicher 6 abgelegten RGB (Rot-Grün-Blau)-Bilder des Bestandes 1 und die abgefragten Nutzerdaten über das Internet 7 an den zentralen Server 5 übertragen.
Das in Fig. 3 beispielhafte gezeigte RGB-Bild 8 wird durch den Bildkalibrierungs- und -auswertealgorithmus im Server 5 kalibriert und zugleich zu einer Dünge- und/oder Pflanzenschutzempfehlung verarbeitet, die über das Internet 7 an das Smartphone 2 zurückgesendet und auf dem Display des Smartphones 2 zur Anzeige gebracht wird (siehe Fig. 1b). Der Landwirt kann dann, wenn nötig, sofort entsprechende Maßnahmen für eine optimale Versorgung des Pflanzenbestandes 1 ergreifen.

Die Ausführung des erfindungsgemäßen Verfahrens ist jedoch nicht an den zentralen Server 5 gebunden, sondern kann auch direkt auf dem Smartphone 2 ausgeführt werden, wenn der erfindungsgemäße Bildkalibrierungs- und -auswertealgorithmus im Speicher des Smartphones 2 abgelegt ist.
Alternativ ist es aber auch möglich, die zuvor mit einer Digitalkamera aufgenommenen RGB-Bilder 8 auf den Server 5 hochzuladen, diese zusammen mit den Nutzereingaben mittels des Bildkalibrierungs- und -auswertealgorithmus auf dem Server 5 zu verarbeiten und die daraus resultierende Dünge- und/oder Pflanzenschutzempfehlung auf dem Web-Browser des Anwenders anzuzeigen.

Die Digitalkamera 3 des Smartphones 2 wird in waagerechter Lage ca. 1 bis 3 m senkrecht über den Pflanzenbestand 1 in Position gebracht und vom Pflanzenbestand 1 mindestens ein RGB-Bild 8 aufgenommen.
Die Digitalkamera 3 hat ein Auflösungsvermögen von z.B. 1,3 Megapixeln.

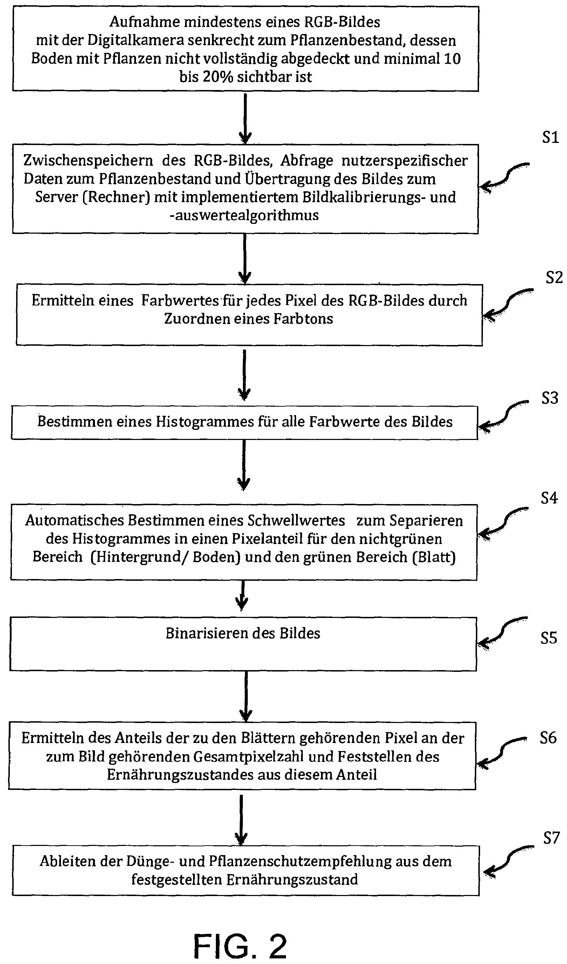

Das erfindungsgemäße Verfahren läuft, wie Fig. 2 schematisch zeigt, wie folgt ab.

Der Landwirt nimmt mit der Digitalkamera 3 des internetfähigen Smartphones 2 ein RGB-Bild 8 auf, speichert dieses im Zwischenspeicher des Smartphones 2 und sendet das Bild 8 über das Internet 7 an den Server 5, in dem ein Bildkalibrierungs- und -auswertealgorithmus zur Kalibrierung des RGB-Bildes und zu dessen Verarbeitung installiert ist (Schritt S1).
Bedingung ist, dass der Pflanzenbestand 1 den Boden 9 nicht vollständig bedeckt, so dass im RGB-Bild 8 ein Minimum an einem nichtgrünen Hintergrund, typischerweise Boden, sichtbar und auch ausreichend ausgeleuchtet ist. Es hat sich gezeigt, dass ein Minimum von etwa 10 bis 20% an nichtgrünen Hintergrundpixeln ausreichend ist, um repräsentative Ergebnisse zu erreichen.
Von besonderem Vorteil ist, dass der Landwirt an der Digitalkamera 2 keine besonderen Vorkehrungen für Referenzflächen und Halterungen treffen und auch keine kameraspezifischen Korrekturen vornehmen muss.

Im Arbeitsschritt S2 wird für jeden Pixel des RGB-Bildes 8 ein Farbwert ermittelt, der einen möglichst deutlichen Kontrast zwischen dem Hintergrund (Boden) und dem grünen Pflanzenblatt bildet und dabei Helligkeitsunterschiede weitgehend eliminiert.
Für die Auswahl des Farbwertes hat sich vor allem die Buntheit, d.h. der Farbton, aus dem HSB-Farbraum besonders geeignet erwiesen, wobei die Buntheit durch die Wellenlänge des Lichts charakterisiert ist, das von einem Objekt, hier der Boden oder die Blätter, reflektiert oder absorbiert wird. Der Farbton ist durch seine Position auf dem Standard-Farbkreis definiert und kann Winkel zwischen 0 Grad und 360 Grad annehmen. So definiert beispielsweise der Wert 0 Grad = 360 Grad den Farbton Rot, der Wert 120 den Farbton Grün und der Wert 240 den Farbton Blau.
Aber auch die Differenz zweier Farbkanäle, beispielsweise die Grün-minus-Rot-Differenz (G-R), ergibt brauchbare Kontraste im Farbwert-Bild wie die Fig. 4 zeigt.

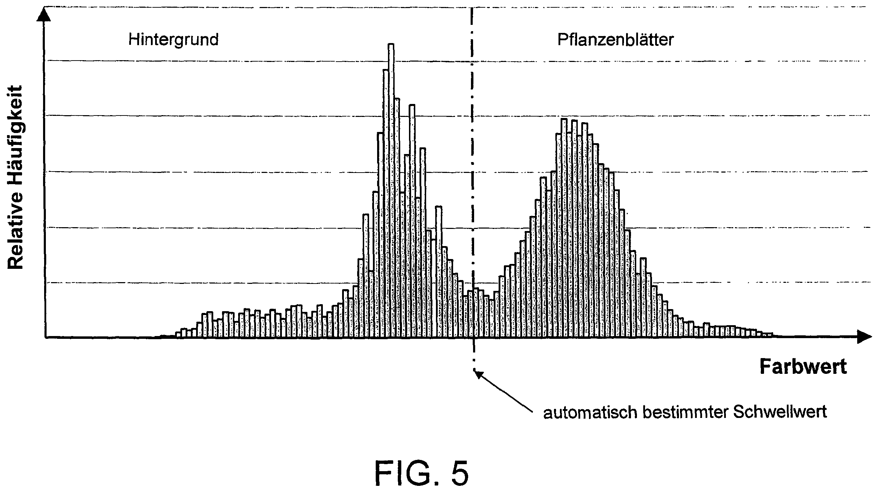

Aus allen Farbwerten eines Bildes wird im Arbeitsschritt S3 ein Histogramm erstellt, das in Fig. 5 ein Beispiel für die relative Häufigkeit der dem Hintergrund und den Pflanzenblättern zugordneten Pixeln in Abhängigkeit der Farbwerte zeigt.
Im Histogramm ist ein automatisch bestimmter Schwellwert angegeben, der es ermöglicht, die zum Hintergrund gehörenden Pixel von den zu den Blättern gehörenden Pixeln zu separieren. Für die automatische Bestimmung des Schwellwertes kommen beispielsweise die bekannten Verfahren nach Otsu oder der Isodata-Algorithmus in Frage.

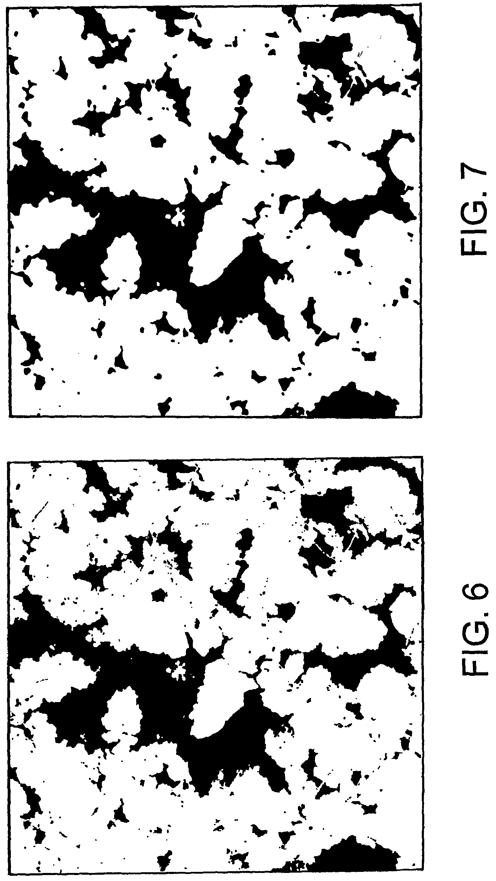

Aus dem im Arbeitsschritt S4 ermittelten Histogramm lässt sich im Arbeitsschritt S5 ein Binärbild gewinnen. Ein Beispiel eines derartigen Binärbildes zeigt die Fig. 6, die deutlich Kanten und einzelne verrauschte Pixel erkennen lässt. Derartige Kanten und/oder verrauschte Pixel können optional durch eine Erosion, d.h. eine Verkleinerung, und eine Dilatation, d.h. Ausdehnung der Bildobjekte, geglättet oder entfernt werden. Ein solches geglättetes Binärbild zeigt Fig. 7.

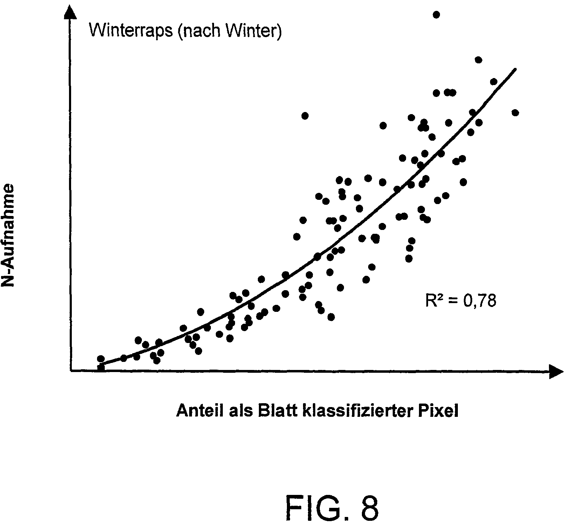

Im Arbeitsschritt S6 wird aus dem Binärbild der Anteil der als Blatt klassifizierten Pixel an der Gesamtpixelzahl des Bildes und dann daraus über empirisch bestimmte Kalibrierungsfunktionen der aktuelle Ernährungszustand ermittelt. Die Fig. 8 zeigt exemplarisch den Zusammenhang zwischen dem Anteil der Blattpixel und dem Ernährungszustand am Beispiel der Stickstoffaufnahme für Winterraps.

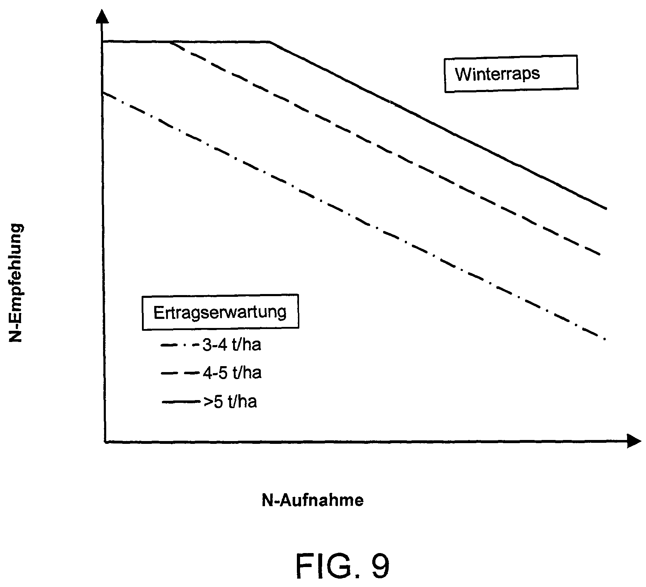

In Fig. 9 ist ein beispielhaft dargestellt wie eine Stickstoffdüngeempfehlung als Funktion der im Schritt S6 bestimmten Stickstoffaufnahme und einem vorgegebenen Ertragsziel abgeleitet werden kann. Der Landwirt kann damit in einfacher Weise, die nachfolgende Gabe an Stickstoffdünger entsprechend seinen Ertragszielen anpassen.

### Beispiel 2

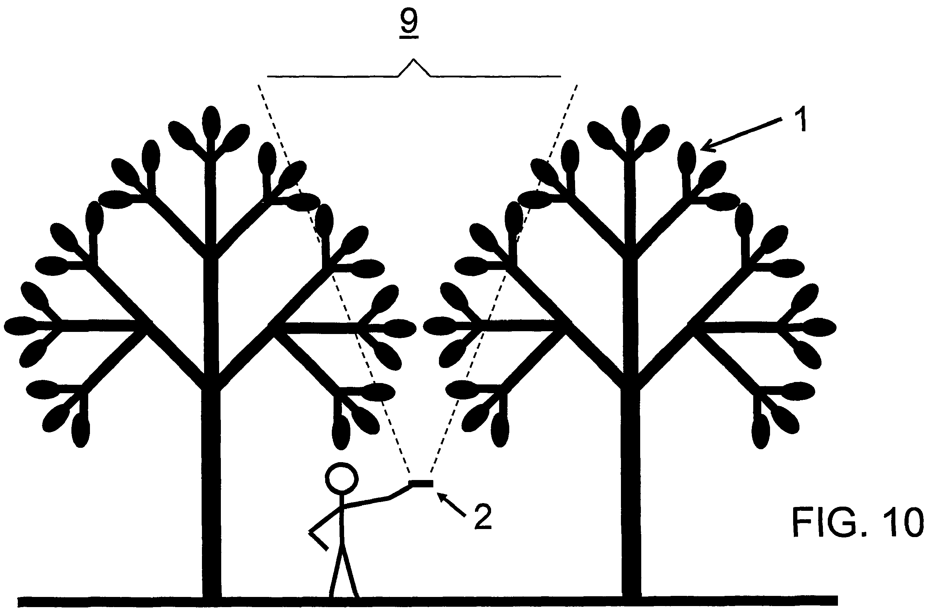

Das erfindungsgemäße Verfahren kommt auf einer mit Bäumen bepflanzten Plantage zum Einsatz (siehe Fig. 10).
Die Digitalkamera 3 wird senkrecht nach oben an definierter Position zwischen den Baumstämmen zum Hintergrund, also zum Himmel, ausgerichtet, wobei sichergestellt sein muss, dass das Blattwerk des Baumes den Hintergrund nicht vollständig abdeckt. Bedingung ist, dass mindestens 10 bis 20% des Hintergrundes sichtbar bleiben muss.
In diesem Fall genügt es, als Farbwert statt des Farbtones oder der R-G-Differenz die Helligkeitsinformation zu nutzen, da der Helligkeitskontrast zwischen Blättern und Himmelshintergrund i.a. sehr groß ist.

Der Ablauf des erfindungsgemäßen Verfahrens entspricht ansonsten dem des Beispiels 1.

### Bezugszeichenliste

- Pflanzenbestand: 1
- Smartphone: 2
- Digitalkamera: 3
- Speicher in 5: 4
- Server: 5
- Zwischenspeicher in 3: 6
- Internet: 7
- RGB-Bild: 8
- Boden/Untergrund/Hintergrund/Himmel: 9

## Patentansprüche

1. Verfahren zum berührungslosen Bestimmen des aktuellen Ernährungszustandes eines nicht gegenüber dem Boden vollständig geschlossenen oder eines nicht den Hintergrund vollständig bedeckenden Pflanzenbestandes und zum Verarbeiten dieser Informationen unter Berücksichtigung weiterer Parameter wie Fruchtart und/oder Sorte und/oder Entwicklungsstadium und/oder Ertragsziel in eine Dünge- und/oder Pflanzenschutzempfehlung, bei dem von einem Teil des Pflanzenbestandes ein aus Pixeln zusammengesetztes digitales Bild mittels eines Bildaufnahmesystems in mindestens zwei spektralen Kanälen aufgenommen, aus dem Bild der aktuelle Ernährungszustand durch eine Bildanalyse ermittelt und daraus die Dünge- und/oder Pflanzenschutzempfehlung abgeleitet wird, **dadurch gekennnzeichnet,** dass das digitale Bild in sich durch das Ermitteln der relativen Farbwerte für die einzelnen Bildpixel nach der Bildaufnahme in der Bildanalyse auf unterschiedliche Lichtbedingungen, Bildeinstellungen und Bildaufnahmesysteme kalibriert wird, wobei der nicht mit Pflanzen bedeckte Bodenanteil an der Gesamtfläche des digitalen Bildes mindestens 10 bis 20% beträgt.

2. Verfahren nach Anspruch 1, **gekennzeichnet durch** folgende Schritte:
a) Ermitteln eines Farbwertes für jedes Pixel des digitalen Bildes, vorzugsweise **durch** Zuordnen eines Farbtones aus dem HSB (Hue-Saturation-Brightness)-Farbraum, einer G-R (Grün-minus-Rot)-Differenz oder eines Grauwertes;
b) Bestimmen eines Histogramms für alle Farbwerte des Bildes;
c) automatisches Bestimmen eines Schwellwertes mittels statistischer Hilfsmittel aus der Streuung der Farbwerte zum Separieren des Histogramms in die dem Boden bzw. Hintergrund und den Blättern des Bestandes zugehörigen Pixel;
d) Binarisieren des Bildes mit dem im Schritt c) bestimmten Schwellwert;
e) Ermitteln des Anteils der zu den Blättern gehörenden Pixel an der zum Bild gehörenden Gesamtzahl und Feststellen des aktuellen Ernährungszustandes aus diesem Anteil;
f) Ableiten der Dünge- und/oder Pflanzenschutzempfehlung aus dem im Schritt e) bestimmten Ernährungszustand.

3. Verfahren nach Anspruch 2, **dadurch gekennzeichnet, dass** durch Erosion bzw. Dilatation im Binärbild gemäß Schritt d) die Kanten geglättet und einzelne verrauschte Pixel entfernt werden.

4. Verfahren nach Anspruch 2, **dadurch gekennzeichnet, dass** überbelichtete Pixel unabhängig vom ermittelten Farbwert als zu den Blättern gehörende Pixel klassifiziert werden.

5. Verfahren nach Anspruch 1, **dadurch gekennzeichnet, dass** der Ernährungszustand durch die aktuelle Stickstoffaufnahme, insbesondere Stickstoffmenge im oberirdischen Teil des Pflanzenbestandes pro Flächeneinheit des Bodens bestimmt wird.

6. Verfahren nach Anspruch 1 bis 6, **dadurch gekennzeichnet, dass** die Stickstoffaufnahme aus dem Anteil der als Blatt klassifizierten Pixel gemäß Schritt e) mittels mindestens einer empirisch ermittelten Funktion zwischen Stickstoffaufnahme und dem Anteil der Pixel abgeleitet wird.

7. Verfahren nach Anspruch 1, **dadurch gekennzeichnet, dass** das Bildaufnahmesystem vom Nutzer zur Aufnahme des mindestens einen Bildes senkrecht über den Pflanzenbestand oder zum Hintergrund gehalten wird, das aufgenommene Bild direkt analysiert und eine aktuelle Dünge- und/oder Pflanzenschutzempfehlung angezeigt wird.

8. Verfahren nach Anspruch 7, **dadurch gekennzeichnet, dass** die senkrechte Lage des Bildaufnahmesystems durch einen Lagesensor detektiert wird, der die Bildaufnahme durch das Bildaufnahmesystem freigibt.

9. Verfahren nach Anspruch 1, **dadurch gekennzeichnet, dass** das Bildaufnahmesystem über den Pflanzenbestand bewegt wird und bei der Bewegung kontinuierlich Bilder erzeugt werden, die in Echtzeit analysiert werden, wobei ständig eine aktuelle Dünge- und/oder Pflanzenschutzempfehlung abgeleitet und diese in eine Steuergröße für ein variabel steuerbares Ausbringgerät umgesetzt wird.

10. Verfahren nach Anspruch 1, **dadurch gekennzeichnet, dass** als Bildaufnahmesystem eine Digitalkamera mit drei Spektralkanälen (rot, grün, blau) und für die Bildanalyse ein PC verwendet wird.

11. Verfahren nach Anspruch 1, **dadurch gekennzeichnet, dass** zur Durchführung der Kalibrierung und Bildanalyse das mindestens eine digitale Bild von der Digitalkamera auf einen Server oder separaten PC überspielt wird.

12. Verfahren nach Anspruch 1, **dadurch gekennzeichnet, dass** als Bildaufnahmesystem ein handelsübliches internetfähiges Smartphone mit integrierter Digitalkamera verwendet wird, deren Bild direkt vom im Smartphone implementierten Bildkalibrierungs- und -auswertealgorithmus verarbeitet und angezeigt wird.

13. Verfahren nach Anspruch 1, **dadurch gekennzeichnet, dass** als Bildaufnahmesystem ein Smartphone mit Kamera oder ein Mobiltelefon mit Kamera verwendet wird, deren Bild zu einem Internetserver überspielt wird, wobei die Kalibrierung und die Bildanalyse von dem im Server implementierten Bildkalibrierungs- und -auswertealgorithmus durchgeführt wird und das Ergebnis der Analyse an den Nutzer zurückgesendet und angezeigt wird.

14. Verfahren nach Anspruch nach Anspruch 12 oder 13, **dadurch gekennzeichnet, dass** die digitalen Bilder und/oder die daraus ermittelten Analyseergebnisse mit von einem GPS-Empfänger gewonnenen Positionsdaten verknüpft werden.

## Claims

1. A method for contactlessly determining the current nutritional status of a crop which is not completely continuous with regard to the soil or does not completely cover the background and for processing said information while taking account of further parameters such as fruit type and/or variety and/or development stage and/or target yield to provide a fertilising and/or plant protection recommendation, in which a digital image composed of pixels of part of the crop is captured in at least two spectral channels by means of an image capture system, the current nutritional status is ascertained from the image by image analysis and the fertilising and/or plant protection recommendation is derived therefrom, **characterised in that** the digital image is internally calibrated for different light conditions, image settings and image capture systems by ascertaining the relative colour values for the individual image pixels after image capture during image analysis, wherein the proportion of soil not covered with plants amounts to at least 10 to 20% of the total area of the digital image.

2. A method according to claim 1, **characterised by** the following steps:
a) ascertaining a colour value for each pixel of the digital image, preferably by assigning a colour shade from the HSB (Hue-Saturation-Brightness) colour space, a G-R (green-minus-red) difference or a grey value;
b) determining a histogram for all the colour values of the image;
c) automatically determining a threshold value by statistical procedures from the scatter of the colour values in order to separate the histogram into pixels belonging to the soil or background and to the foliage of the crop;
d) binarising the image using the threshold value determined in step c);
e) ascertaining the proportion of pixels belonging to the foliage in the total number belonging to the image and establishing the current nutritional status from said proportion;
f) deriving the fertilising and/or plant protection recommendation from the nutritional status determined in step e).

3. A method according to claim 2, **characterised in that** the edges are smoothed in the binary image according to step d) by erosion or dilation and individual noisy pixels are removed.

4. A method according to claim 2, **characterised in that**, irrespective of the ascertained colour value, over-exposed pixels are classified as pixels which belong to the foliage.

5. A method according to claim 1, **characterised in that** nutritional status is determined by the current nitrogen uptake, in particular the quantity of nitrogen in the above-ground part of the crop per unit area of soil.

6. A method according to claims 1 to 6, **characterised in that** nitrogen uptake is derived from the proportion of pixels classified as foliage according to step e) by means of at least one empirically ascertained function between nitrogen uptake and the proportion of pixels.

7. A method according to claim 1, **characterised in that**, in order to capture the at least one image, the image capture system is held by a user vertically above the crop or the background, the captured image is directly analysed and a current fertilising and/or plant protection recommendation is displayed.

8. A method according to claim 7, **characterised in that** the vertical position of the image capture system is detected by a position sensor which permits image capture by the image capture system.

9. A method according to claim 1, **characterised in that** the image capture system is moved over the crop and, during the movement, images are continuously produced which are analysed in real time, wherein a current fertilising and/or plant protection recommendation is derived on an ongoing basis and converted into a control variable for a variably controllable application device.

10. A method according to claim 1, **characterised in that** a digital camera with three spectral channels (red, green and blue) is used as the image capture system and a PC is used for image analysis.

11. A method according to claim 1, **characterised in that**, in order to carry out calibration and image analysis, the at least one digital image is transferred from the digital camera to a server or separate PC.

12. A method according to claim 1, **characterised in that** the image capture system used is a conventional commercial internet-enabled smartphone with integrated digital camera, the image from which is directly processed and displayed by the image calibration and evaluation algorithm implemented in the smartphone.

13. A method according to claim 1, **characterised in that** the image capture system used is a smartphone with camera or a mobile telephone with camera, the image from which is transferred to an internet server, wherein calibration and image analysis are carried out by the image calibration and evaluation algorithm implemented in the server and the result of the analysis is sent back to the user and displayed.

14. A method according to claim 12 or 13, **characterised in that** the digital images and/or the analytical results ascertained therefrom are linked with location data obtained with a GPS receiver.

## Revendications

1. Procédé de détermination sans contact de l'état nutritionnel effectif d'un peuplement végétal non complètement raccordé au sol ou d'un peuplement végétal ne recouvrant pas complètement l'arrière-plan, et de traitement desdites informations en prenant en compte d'autres paramètres comme le type de fruit et/ou la variété et/ou le stade de développement et/ou l'objectif de production pour fournir une recommandation de fertilisant et/ou de protection phytosanitaire, dans lequel une image numérique, composée de pixels, d'une partie du peuplement végétal est enregistrée au moyen d'un système de prise de vue dans au moins deux bandes spectrales, l'état nutritionnel effectif est déterminé à partir de l'image grâce à une analyse d'image et la recommandation de fertilisant et/ou de protection phytosanitaire en est déduite, **caractérisé en ce que** l'image numérique est étalonnée en ce qui concerne différentes conditions lumineuses, paramètres d'image et systèmes de prise de vue grâce à la détermination des valeurs de couleur relatives pour les pixels d'image individuels, lors de l'analyse d'image et après la prise de vue, la proportion de sol non recouvert de plantes par rapport à la surface totale de l'image numérique étant d'au moins 10 à 20 %.

2. Procédé selon la revendication 1, **caractérisé par** les étapes suivantes consistant à :
a) déterminer une valeur de couleur pour chaque pixel de l'image numérique, de manière préférée par affectation d'une tonalité chromatique issue de l'espace colorimétrique HSB (Hue-Saturation-Brightness), d'une différence V-R (vert moins rouge) ou d'une nuance de gris ;
b) définir un histogramme pour toutes les valeurs de couleur de l'image ;
c) définir de manière automatique une valeur de seuil au moyen d'une aide statistique à partir de la diffusion des valeurs de couleur pour séparer l'histogramme en pixels appartenant au sol ou à l'arrière-plan et en pixels appartenant aux feuilles du peuplement ;
d) binariser l'image avec la valeur de seuil définie à l'étape c) ;
e) déterminer une proportion des pixels appartenant aux feuilles par rapport au nombre total de pixels appartenant à l'image et évaluer l'état nutritionnel effectif à partir de ladite proportion ;
f) déduire la recommandation de fertilisant et/ou de protection phytosanitaire à partir de l'état nutritionnel défini à l'étape e).

3. Procédé selon la revendication 2, **caractérisé en ce que** les arêtes sont lissées par érosion ou dilatation dans l'image binaire conformément à l'étape d) et des pixels individuels bruyants sont éliminés.

4. Procédé selon la revendication 2, **caractérisé en ce que** des pixels surexposés sont classés comme pixels appartenant aux feuilles indépendamment de la valeur de couleur déterminée.

5. Procédé selon la revendication 1, **caractérisé en ce que** l'état nutritionnel est défini grâce à l'absorption effective d'azote, en particulier grâce à la quantité d'azote présente dans la partie située au-dessus du sol du peuplement végétal par unité de surface du sol.

6. Procédé selon la revendication 1 à 6, **caractérisé en ce que** l'absorption d'azote est déduite à partir de la proportion des pixels classés comme feuille à l'étape e) au moyen d'au moins une fonction déterminée de manière empirique et liant l'absorption d'azote à la proportion des pixels.

7. Procédé selon la revendication 1, **caractérisé en ce que** le système d'enregistrement d'image est tenu par l'utilisateur verticalement au-dessus du peuplement végétal ou par rapport à l'arrière-plan en vue de l'enregistrement de la au moins une image, l'image enregistrée est directement analysée et une recommandation effective de fertilisation et/ou de protection phytosanitaire est indiquée.

8. Procédé selon la revendication 7, **caractérisé en ce que** la position verticale du système de prise de vue est détectée grâce à un capteur de position, qui déclenche l'enregistrement d'image par le système de prise de vue.

9. Procédé selon la revendication 1, **caractérisé en ce que** le système de prise de vue est déplacé au-dessus du peuplement végétal et des images sont produites en continu lors dudit déplacement, lesdites images étant analysées en temps réel, dans lequel une recommandation effective de fertilisation et/ou de protection phytosanitaire est déduite en continu et celle-ci est convertie en grandeur de commande pour un appareil d'épandage pouvant être commandé de manière variable.

10. Procédé selon la revendication 1, **caractérisé en ce qu'**une caméra numérique avec trois bandes spectrales (rouge, vert, bleu) est utilisée en tant que système de prise de vue et un ordinateur personnel est utilisé pour l'analyse d'image.

11. Procédé selon la revendication 1, **caractérisé en ce que** la au moins une image numérique est chargée par la caméra numérique sur un serveur ou un ordinateur personnel séparé en vue de la mise en oeuvre de l'étalonnage et de l'analyse d'image.

12. Procédé selon la revendication 1, **caractérisé en ce qu'**un téléphone cellulaire multifonctions du commerce, ayant accès à Internet et possédant une caméra numérique intégrée, dont l'image est traitée et affichée directement par un algorithme d'étalonnage et d'évaluation d'image mis en place dans le téléphone cellulaire multifonctions est utilisé en tant que système de prise de vue.

13. Procédé selon la revendication 1, **caractérisé en ce qu'**un téléphone cellulaire multifonctions avec une caméra ou un téléphone mobile avec une caméra, dont l'image est chargée vers un serveur Internet, est utilisé en tant que système de prise de vue, dans lequel l'étalonnage et l'analyse d'image sont mis en oeuvre par l'algorithme d'étalonnage et d'évaluation d'image mis en place dans le serveur et le résultat de l'analyse est renvoyé vers l'utilisateur et indiqué à celui-ci.

14. Procédé selon la revendication 12 ou 13, **caractérisé en ce que** les images numériques et/ou et les résultats d'analyse déterminés à partir de celles-ci sont associés à des données de position obtenues grâce à un récepteur GPS.
